# EUROPÄISCHE PATENTANMELDUNG

(11) **EP 1 265 010 A2**
(43) Veröffentlichungstag der Anmeldung: **11.12.2002**
(21) Anmeldenummer: 02012002.8
(22) Anmeldetag: 31.05.2002
(51) Int. Cl.: F16H 61/42, F16H 59/38

(54) **Steuersystem für ein hydrostatisches Getriebe**

(30) Priorität: 07.06.2001 US 876322
(71) Anmelder: DEERE & COMPANY, Moline, Illinois 61265-8098 (US)
(72) Erfinder: Mistry, Sanjay Ishvarlal, Cedar Falls, IA 50613 (US)
(74) Vertreter: Lau-Loskill, Philipp, Dipl.-Phys.

(57) **Zusammenfassung**

Es wird ein Steuersystem (22) beschrieben, für ein hydrostatisches Getriebe mit einer motorgetriebenen regelbaren Verdrängungspumpe (12), die an einen konstanten Verdrängungsmotor (16) gekoppelt ist. Die Pumpe (12) enthält eine Taumelscheibe (60), die von einem durch das Steuersystem (22) generiertes Steuersignal gesteuert wird. Das Steuersystem (22) enthält einen Drehzahlvorgabe-Signalgenerator (24), einen Verdrängungsmotordrehzahlsensor (26) zur Erzeugung eines abgetasteten Verdrängungsmotordrehzahlsignals, einen Antriebsmotordrehzahlsensor (28) zur Erzeugung eines abgetasteten Antriebsmotordrehzahlsignals und eine Steuereinheit (30-46, 70, 72), die das Steuersignal als Funktion dieser Drehzahlsignale generiert.

## Beschreibung

Die Erfindung betrifft ein Steuersystem zur Steuerung eines hydrostatischen Getriebes, welches eine motorgetriebene regelbare Verdrängungspumpe enthält, die an einen regelbaren oder konstanten Verdrängungsmotor gekoppelt ist, wobei der Verdrängungsmotor eine Taumelscheibe enthält, die durch ein vom Steuersystem generiertes Steuersignal gesteuert wird.

Stufenlos verstellbare Getriebe enthalten eine Hydrostateinheit mit einer durch einen Antriebsmotor angetriebenen regelbaren Verdrängungspumpe (Verstelleinheit) und einem konstanten Verdrängungsmotor (Konstanteinheit). Die Verstelleinheit enthält eine Taumelscheibe, welche um eine neutrale Position schwenkbar ist. Die Konstanteinheit kann über eine Getriebeeinheit und ein Planetengetriebe mit den Antriebsrädern eines Fahrzeugs verbunden sein. Um solch ein stufenlos verstellbares Getriebe exakt zu steuern, muss die Position der Taumelscheibe unter Berücksichtigung eines Drehzahlvorgabesignals exakt angesteuert werden, so dass die Ausgangsdrehzahl des stufenlos verstellbaren Getriebes genau mit der vorgegebenen Drehzahl übereinstimmt. Es ist auch erstrebenswert, ein Steuersystem für ein stufenlos verstellbares Getriebe zu haben, das derart arbeitet, dass die Ausgangsdrehzahl des stufenlos verstellbaren Getriebes gleichermaßen präzise für niedrige und hohe Drehzahlen, bei Vorwärts- und Rückwärtsfahrt steuerbar ist.

Die der Erfindung zugrunde liegende Aufgabe wird darin gesehen, ein Steuersystem für ein stufenlos einstellbares Getriebe der eingangs genannten Art anzugeben, durch welches die vorgenannten Probleme überwunden werden. Insbesondere soll ein Steuersystem für ein stufenlos verstellbares Getriebe angegeben werden, welches die Position einer Taumelscheibe unter Berücksichtigung eines Drehzahlvorgabesignals exakt steuert. Des Weiteren soll das Steuersystem derart arbeiten, dass die Ausgangsdrehzahl des stufenlos verstellbaren Getriebes genau mit der Drehzahlvorgabe übereinstimmt und dass die Ausgangsdrehzahl des stufenlos steuerbaren Getriebes gleichermaßen genau für niedrige und hohe Drehzahlen, bei Vorwärts- und Rückwärtsfahrten steuerbar ist.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Bei der vorliegenden Erfindung wird vorzugsweise eine Hydrostateinheit durch ein Steuersystem gesteuert, wobei das Steuersystem einen Steueralgorithmus für einen geschlossenen Regelkreis beinhaltet. Das Steuersystem steuert ein hydrostatisches Getriebe, welches eine motorgetriebene regelbare Verdrängungspumpe enthält, die an einen konstanten Verdrängungsmotor gekoppelt ist. Die Pumpe enthält eine Taumelscheibe, die durch ein vom Steuersystem generiertes Steuersignal angesteuert wird.

Erfindungsgemäß enthält das Steuersystem einen Drehzahlvorgabe-Signalgenerator, einen Motordrehzahlsensor zur Erzeugung eines abgetasteten Verdrängungsmotordrehzahlsignals und einen Antriebsmotordrehzahlsensor zur Erzeugung eines Antriebsmotordrehzahlsignals. Des Weiteren ist eine Steuereinheit enthalten, welche ein Steuersignal, als Funktion des Drehzahlvorgabesignals, des abgetasteten Verdrängungsmotordrehzahlsignals und des Antriebsmotordrehzahlsignals generiert. Des Weiteren generiert die Steuereinheit ein Motorsolldrehzahlsignal als Funktion des Drehzahlvorgabesignals und des Antriebsmotordrehzahlsignals, ein Taumelscheibensollwinkelsignal als Funktion des Motorsolldrehzahlsignals und ein Differenzsignal aus der Differenz zwischen Motorsolldrehzahlsignal und dem abgetasteten Verdrängungsmotordrehzahlsignal. Des Weiteren generiert die Steuereinheit ein Integralsignal unter Anwendung einer Integralfunktion auf das Differenzsignal sowie ein Summensignal durch Summierung des Taumelscheibensollwinkelsignals und des Integralsignals. Das von der Steuereinheit generierte Steuersignal wird als Funktion des Summensignals generiert.

Das von der erfindungsgemäßen Steuereinheit generierte Taumelscheibensollwinkelsignal stellt vorzugsweise eine Sollwinkelstellung der Taumelscheibe dar.

Zusätzlich zu den oben beschriebenen, von der Steuereinheit generierten Signalen, werden in einer besonders bevorzugten Ausführung der Erfindung weitere Signale generiert, die in dem Steueralgorithmus einfließen. So wird ein Proportionalsignal, durch Anwendung einer Proportionalfunktion auf das Differenzsignal, und ein Differenzialsignal, durch Anwendung einer Differenzialfunktion auf das Differenzsignal, generiert. Dementsprechend wird das von der Steuereinheit generierte Summensignal durch Summierung des Taumelscheibensollwinkelsignals, des Proportionalsignals, des Integralsignals und des Differenzialsignals generiert.

In einem weiteren besonders bevorzugten Ausführungsbeispiel der Erfindung wird anstelle der Generierung eines Proportional- und Differenzialsignals und der anschließenden Summierung dieser Signale auf das Summensignal eine Duofunktion (lead-lag-Funktion) auf das Summensignal angewendet. In diesem Fall entsteht das von der Steuereinheit generierte Steuersignal als Funktion des Summensignals, aus Taumelscheibensollwinkelsignal und Integralsignal, mit darauf angewendeter Duofunktion.

Vorzugsweise wird des Weiteren, als Eingangsgröße für die Steuereinheit, ein Verhältnis-Sollwertsignal als Funktion des Drehzahlvorgabesignals und des Motordrehzahlsignals generiert. Als Folge dessen wird aus dem Verhältnis-Sollwertsignal und dem Motordrehzahlsignal ein Motorsolldrehzahlsignal generiert, welches ebenfalls in den Regelkreis mit einfließt.

Zusätzlich zu den oben beschriebenen bevorzugten Ausführungsbeispielen der Erfindung werden für die einzelnen Regelgrößen im Regelkreis der Steuereinheit, insbesondere für das Integralsignal, verschiedene variable Verstärkungsfaktoren eingesetzt. Dabei werden die variablen Verstärkungsfaktoren in Abhängigkeit des Differenzsignals, das bei der Generierung der unterschiedlichen Signale verwendet wird, und in Abhängigkeit verschiedener vorgebbarer Schwellwerte gebildet.

In diesem Zusammenhang wird der variable Verstärkungsfaktor für das Integralsignal auf einen Minimalwert gesetzt, wenn das Differenzsignal kleiner oder gleich einem niedrigen Schwellwert ist. Wenn das Differenzsignal größer als ein hoher Schwellwert ist, dann wird der variable Verstärkungsfaktor auf einen Maximalwert gesetzt. Wenn das Differenzsignal größer als ein niedriger Schwellwert und kleiner als ein hoher Schwellwert ist, dann wird der variable Verstärkungsfaktor auf einen variablen Wert gesetzt.

Anhand der Zeichnung, die Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: ein schematisches Blockschaltbild eines bevorzugten Ausführungsbeispiels eines erfindungsgemäßen Steuersystems für ein hydrostatisches Getriebe,
- Fig. 2: ein schematisches Schaltbild der Verdrängungssteuerung aus Fig. 1 und Fig. 5,
- Fig. 3: ein logisches Flussdiagramm, das einen erfindungsgemäßen Algorithmus wiedergibt, der mit einer erfindungsgemäßen Steuereinheit durchgeführt wird,
- Fig. 4: eine Pseudocode-Darstellung einer Funktion, die von der erfindungsgemäßen Steuereinheit ausgeführt wird und
- Fig. 5: ein schematisches Blockschaltbild eines alternativen Ausführungsbeispiels des erfindungsgemäßen Steuersystems für ein hydrostatisches Getriebe.

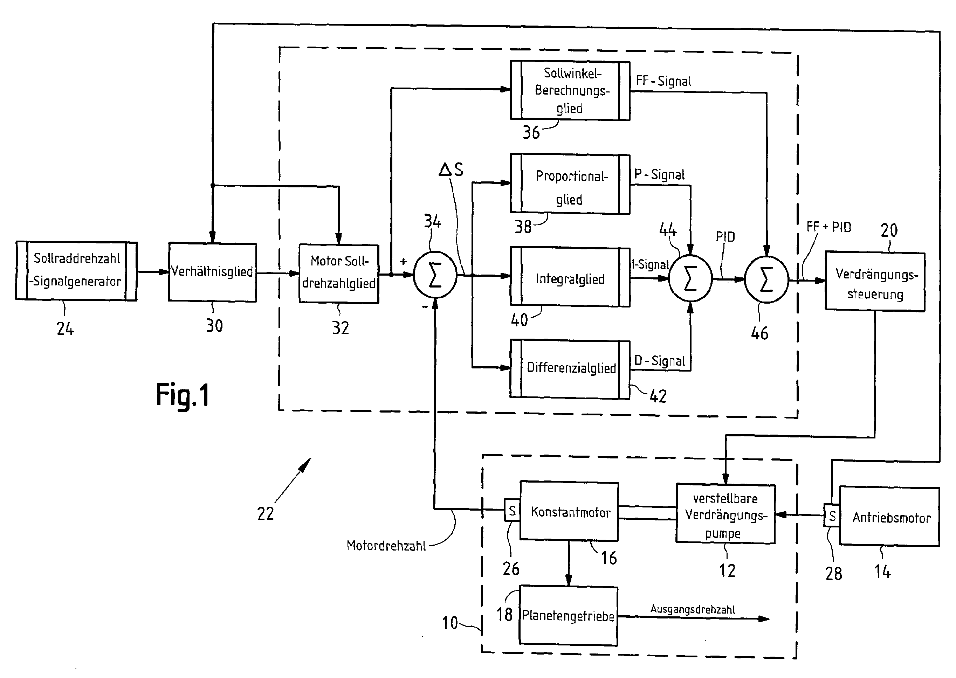

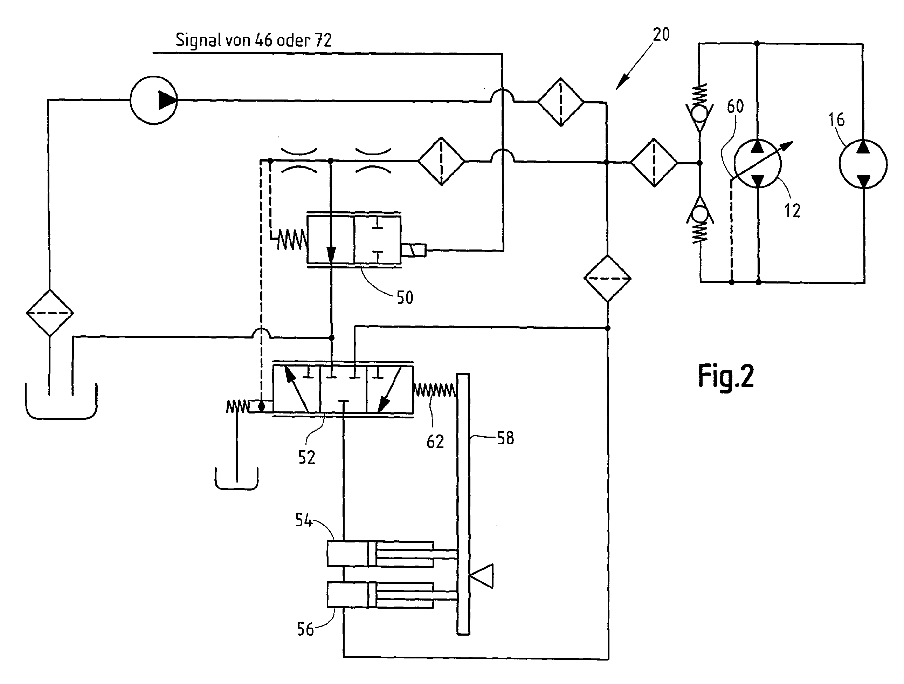

Fig. 1 und 2 zeigen ein hydrostatisches Getriebemodul 10, welches eine verstellbare Verdrängungspumpe oder eine Verstelleinheit 12 enthält, die durch einen Antriebsmotor 14, insbesondere einem Verbrennungsmotor, angetrieben und an einen Konstantmotor 16 gekoppelt ist. Ein Ausgang des Konstantmotors 16 ist über ein Planetengetriebe 18 mit Antriebsrädern (nicht gezeigt) eines Fahrzeugs verbunden. Die Verdrängungspumpe 12 enthält eine Taumelscheibe 60 (Fig. 2) welche durch eine Verdrängungssteuerung 20 gesteuert wird, wobei die Verdrängungssteuerung 20 ein durch ein Steuersystem 22 generiertes Steuersignal empfängt.

Das Steuersystem 22 beinhaltet einen Signalgenerator 24 zur Drehzahlvorgabe, insbesondere zur Vorgabe eines Sollwertes für die Raddrehzahl. Der Signalgenerator 24 ist mit einem Schalter oder einem Schalthebel (nicht gezeigt) gekoppelt, welcher in Neutral-, Park-, Vorwärts- oder Rückwärtsgangposition verstellbar ist. Einen gebräuchlichen Drehzahlvorgabe-Signalgenerator 24 enthält die Schalthebeleinheit, die in der US 5,406,860 beschrieben ist. Das Drehzahlvorgabesignal gibt eine Sollausgangsdrehzahl des Getriebemoduls 10 oder die Solldrehzahl der Räder (nicht gezeigt) wieder.

Das Steuersystem 22 enthält auch einen Motordrehzahlsensor 26, der ein abgetastetes Verdrängungsmotordrehzahlsignal generiert, welches die Drehzahl des Verdrängungsmotors 16 wiedergibt und einen Antriebsmotordrehzahlsensor 28 der ein abgetastetes Antriebsmotordrehzahlsignal generiert, welches die Drehzahl des Antriebsmotors 14 wiedergibt. Das Steuersystem 22 enthält auch ein Verhältnis-Sollwertglied 30, welches den Betriebsmodus des Getriebes 10 als Funktion des Drehzahlsollsignals und des abgetasteten Antriebsmotordrehzahlsignals ermittelt. So hat beispielsweise das Getriebe 10 wenigstens zwei Vorwärtsmodi für langsame und schnelle Drehzahlen und einen Rückwärtsmodus für entgegengesetzte Drehzahlbereiche.

Das Steuersystem enthält auch ein Motorsolldrehzahlglied 32 welches, basierend auf der Antriebsmotordrehzahl, dem Wert des Verhältnis-Sollwertgliedes 30 und dem Betriebsmodus des Getriebes, eine Solldrehzahl für die Konstanteinheit 16 berechnet.

Ein Differenzglied 34 generiert, durch Subtraktion des abgetasteten Verdrängungsmotordrehzahlsignals vom Motorsolldrehzahlsignal, ein Differenzsignal oder Hydro-Drehzahlfehlersignal ΔS.

Ein Sollwinkel-Berechnungsglied 36 für die Verstelleinheit 12 berechnet einen Sollwinkel, basierend auf der Solldrehzahl der Konstanteinheit 16, dem Betriebsmodus des Getriebes 10 und einem maximalen und minimalen Winkelgrenzwert der Verstelleinheit 12 im jeweiligen Getriebemodus. Dieser berechnete Sollwinkel der Verstelleinheit 12 wird als Mitkopplungsvorgabe (feed-forward command FF) genutzt.

Ein Proportionalglied 38 generiert ein Proportional-Vorgabesignal, ein Integralglied 40 generiert ein Integralsignal und ein Differenzialglied 42 generiert ein Differenzial-Vorgabesignal, wobei bekannte Proportional-Integral-Differenzial-Techniken (PID) und variable Verstärkungsfaktoren eingesetzt werden, wie später beschrieben wird. Die Ausgänge der Regelglieder 38-42 werden in einem Summierglied 44 zusammengeführt, um ein PID-Signal zu erzeugen.

Das PID-Signal wird durch ein Summierglied 46 mit der Mitkopplungsvorgabe des Sollwinkel-Berechnungsglieds 36 kombiniert, um ein kombiniertes Mitkopplungs-/PID-Signal zu erzeugen, das der Verdrängungssteuerung 20 zugeführt wird.

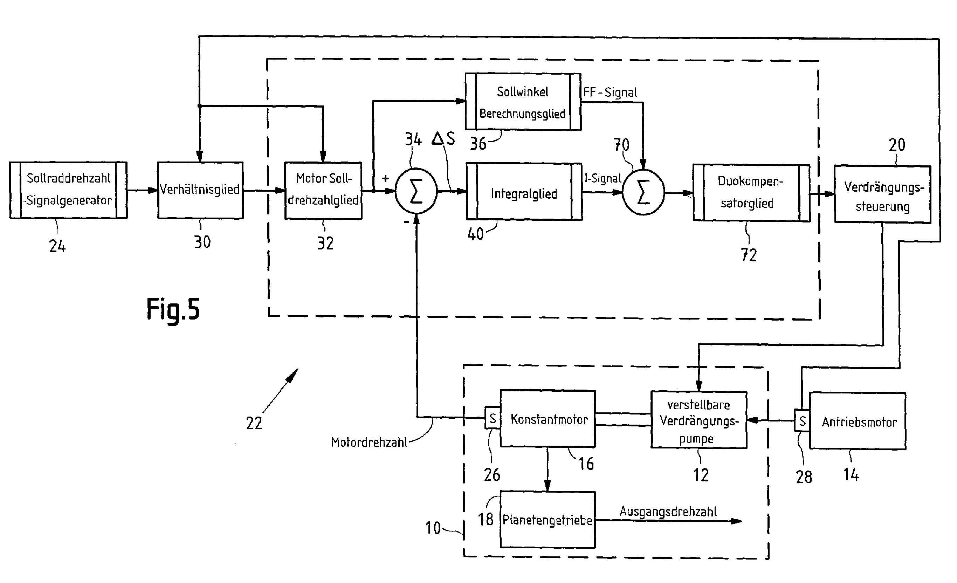

In Fig. 2 ist zu sehen, dass die Verdrängungssteuerung 20 der Verstelleinheit 12 ein elektromagnetisch gesteuertes Ventil 50 enthält, welches ein Ausgangssignal des Summierglieds 46 aus Fig. 1 oder des Gliedes 72 aus Fig. 5 empfängt. Das Ventil 50 steht in Wechselwirkung mit einem Steuerschieberventil 52 und einem Paar Stellkolben 54, 56, um ein Drehglied 58 anzusteuern. Das Drehglied 58 ist mechanisch mit der Taumelscheibe 60 der Verstelleinheit 12 verbunden, um die Position der Taumelscheibe 60 zu steuern. Eine Rückmeldefeder 62 liefert mechanisch eine Rückmeldung vom Drehglied 58 zum Ventil 52. Daraus resultiert, dass durch Kraftausgleich am Steuerventil 52 der Winkel der Taumelscheibe 60 der Verstelleinheit gesteuert wird. Eine Kraft wird durch hydraulischen Druck, der durch das Ventil 50 gesteuert wird, aufgebracht. Die andere Kraft wird von dem Drehglied 58 durch die Rückmeldefeder 62 übertragen. Alternativ könnte die Verdrängungssteuerung 20 eine elektronische Verdrängungssteuerung sein, derart, wie sie bei den John Deere 8000T Serien-Traktoren eingesetzt wird.

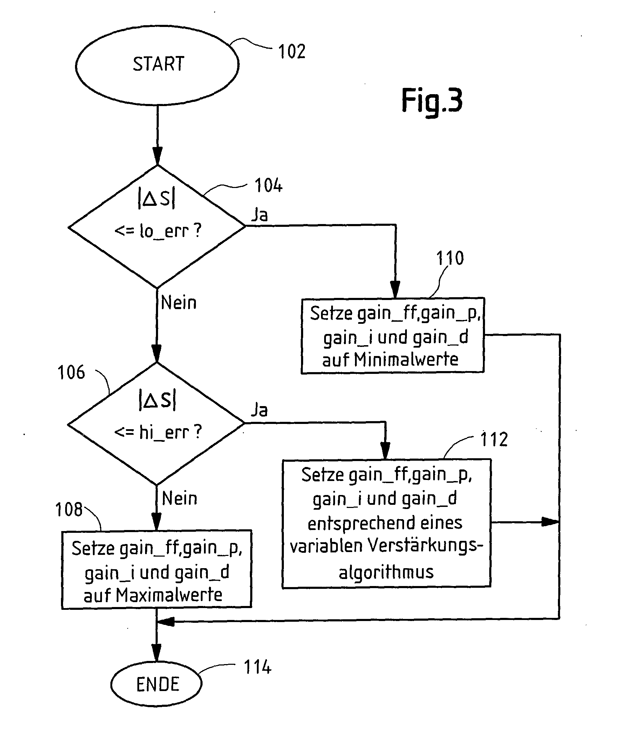

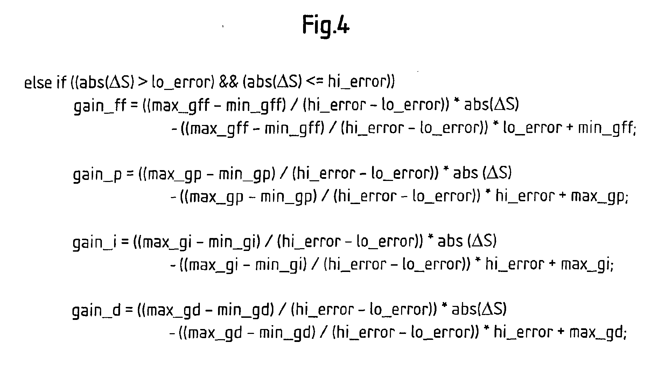

Gemäß Fig. 3 und 4 werden die variablen Verstärkungsfaktoren für die Funktionen 36, 38, 40 und 42 bestimmt. Wie in Fig. 3 gezeigt, führt das Steuersystem 22 einen Algorithmus 100 aus. Nachdem in Schritt 102 gestartet wird, wird in Schritt 104 ΔS mit einem niedrigen Fehlerschwellwert verglichen. Wenn ΔS kleiner oder gleich diesem Schwellwert ist, werden in Schritt 110 die Verstärkungsfaktoren für die Funktionen 36, 38, 40 und 42 auf Minimalwerte gesetzt und der Algorithmus mit Schritt 114 beendet. Wenn ΔS größer als dieser niedrige Schwellwert ist, dann wird der Algorithmus mit Schritt 106 fortgesetzt.

In Schritt 106 wird ΔS mit einem hohen Fehlerschwellwert verglichen. Wenn ΔS kleiner oder gleich diesem hohen Schwellwert ist, dann werden in Schritt 112 die Verstärkungen für die Glieder 36, 38, 40 und 42, entsprechend einem variablen Verstärkungsalgorithmus, der durch die Pseudocodeauflistung in Fig. 4 dargestellt ist, gesetzt. Wenn ΔS größer als dieser hohe Schwellwert ist, wird der Algorithmus mit Schritt 108 fortgeführt.

Schritt 108 setzt die Verstärkungen für die Glieder 36, 38, 40 und 42 auf Maximalwerte. Mit Schritt 114 endet der Algorithmus.

Wie Fig. 4 zeigt, generiert der hier dargestellte variable Verstärkungsalgorithmus variable Verstärkungsfaktoren, die auf die Glieder 36, 38, 40 und 42 aus Fig. 1 wirken. Dabei ist ΔS der Hydro-Drehzahlfehler, lo_err ein niedriger Schwellwert für ΔS, hi_err ein hoher Schwellwert für ΔS, gain_ff ein Vorkopplungs-Verstärkungsterm, gain_p ein Propoortional-Verstärkungsterm, gain_I ein Integral-Verstärkungsterm, gain_d ein Differenzial-Verstärkungsterm, min_gff ein Minimalwert von gain_ff, max_gff ein Maximalwert von gain_ff, min_gp ein Minimalwert von gain_p, max_gp ein Maximalwert von gain_p, min_gi ein Minimalwert von gain_I, max_gi ein Maximalwert von gain_I, min_gd ein Minimalwert von gain_d und max_gd ein Maximalwert von gain_d.

Aus Fig. 3 und 4 ergibt sich, dass die Verstärkungen für die Funktionen 36, 38, 40 und 42 als Funktion des Hydro-Drehzahlfehlers ΔS und als Funktion von niedrigen und hohen Schwellwerten auf Minimalwerte, Maximalwerte oder variable Werte gesetzt werden.

Wie Fig. 5 zeigt, ist das alternative Steuersystem 22A ähnlich dem Steuersystem 22 aus Fig. 1 und weist folgende Unterschiede auf. Im Steuersystem 22A sind die Proportional- und Differenzialglieder 38 und 42 entfernt. Das Mitkopplungsvorgabesignal des Gliedes 36 wird mit dem Integralsignal des Gliedes 40 durch das Summierglied 70 kombiniert und der Ausgang des Summierglieds 70 wird einem Duokompensatorglied 72 (lead-lag compensator) zugeführt. Das Duoglied 72 generiert ein Steuersignal, dass der Verdrängungssteuerung 20 zugeführt wird, vorzugsweise durch Gebrauch von herkömmlichen "Pole-Placement"-Methoden.

Der Einsatz eines "Lead"-Kompensators führt zu einer geringen Zunahme der Verstärkung und einer großen Zunahme der ungedämpften Eigenfrequenz eines Steuersystems. Der Einsatz eines "Lag"-Kompensators in Kaskadenschaltung führt zu einer großen Zunahme der Verstärkung und einer geringen Abnahme der ungedämpften Eigenfrequenz. Das Duokompensatorglied 72 liefert beide Vorteile gleichzeitig. Die große Zunahme in der Verstärkung verbessert das Verhalten im eingeschwungenen Zustand, während eine große Zunahme der ungedämpften Eigenfrequenz das Einschwingverhalten verbessert. Somit kann das Systemverhalten durch einfachen Einsatz von "Lead"- und "Lag"-Kompensatorkomponenten wesentlich verbessert werden.

Folglich enthalten beide Systeme 22 und 22A ein Mitkopplungssignal-Generierungsglied 36 und ein Integralglied 40. Beide Steuersysteme 22 und 22A generieren das Steuersignal als Funktion des Drehzahlvorgabesignals vom Drehzahlvorgabe-Signalgenerator 24, des abgetasteten Motordrehzahlsignals vom Hydraulikmotordrehzahlsensor 26 und des abgetasteten Antriebsmotordrehzahlsignals vom Antriebsmotordrehzahlsensor 28.

Somit bewirkt das Steuersystem 22, dass die Taumelscheibe 60 der Verstelleinheit 12 entsprechend einem vorgegebenen Winkel positioniert wird, der auf dem der Verdrängungssteuerung 20 zugeführten Steuersignal basiert. Die Ausgangsdrehzahl der Konstanteinheit 16 ist daher eine Funktion der Eingangswellendrehzahl der Verstelleinheit 12, des Taumelscheibenwinkels (Verdrängung), der Last und der Wirkungsgrade der Verstelleinheit 12 und der Konstanteinheit 16.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen. So kann beispielsweise das hier beschriebene Steuersystem 22 in eine mikroprozessorbasierende Steuerung, die ein Computerprogramm ausführt, implementiert werden. Das hier beschriebene Steuersystem 22 könnte in Verbindung mit einem hydrostatischen Getriebe verwendet werden, welches anstelle von einer regelbaren und einer konstanten Verdrängungseinheit 12 und 16 zwei regelbare Pumpen/Motor-Einheiten hat,. Die Umsetzung des oben beschriebenen Steuersystems 22 in ein von einem Computer oder Mikroprozessor ausgeführtes Computerprogramm bereitet dem Fachmann keine Schwierigkeit.

## Patentansprüche

1. Steuersystem zur Steuerung eines hydrostatischen Getriebes (10), welches eine motorgetriebene regelbare Verdrängungspumpe (12) enthält, die an einen regelbaren oder konstanten Verdrängungsmotor (16) gekoppelt ist, wobei die Verdrängungspumpe (12) eine Taumelscheibe (60) enthält, die durch ein vom Steuersystem (22) generiertes Steuersignal gesteuert wird, **gekennzeichnet durch**
- einen Drehzahlvorgabe-Signalgenerator (24),
- einen Motordrehzahlsensor (26) zur Erzeugung eines abgetasteten Verdrängungsmotordrehzahlsignals,
- einen Antriebsmotordrehzahlsensor (28) zur Erzeugung eines Antriebsmotordrehzahlsignals und
- eine Steuereinheit (30-46, 70, 72), welche das Steuersignal, als Funktion des Drehzahlvorgabesignals, des abgetasteten Verdrängungsmotordrehzahlsignals und des Antriebsmotordrehzahlsignals generiert, welche ein Motorsolldrehzahlsignal als Funktion des Drehzahlvorgabesignals und des Antriebsmotordrehzahlsignals generiert, welche ein Taumelscheibensollwinkelsignal als Funktion des Motorsolldrehzahlsignals generiert, welche ein Differenzsignal aus der Differenz zwischen Motorsolldrehzahlsignal und dem abgetasteten Verdrängungsmotordrehzahlsignal generiert, welche ein Integralsignal unter Anwendung einer Integralfunktion auf das Differenzsignal generiert, welche ein Summensignal **durch** Summierung des Taumelscheibensollwinkelsignals und des Integralsignals generiert und welche das Steuersignal als Funktion des Summensignals generiert.

2. Steuersystem nach Anspruch 1, **dadurch gekennzeichnet, dass** das Taumelscheibensollwinkelsignal eine Sollwinkelstellung der Taumelscheibe darstellt.

3. Steuersystem nach Anspruch 1 oder 2, **dadurch gekennzeichnet, dass** die Steuereinheit (30-46, 70, 72) ein Proportionalsignal durch Anwendung einer Proportionalfunktion auf das Differenzsignal und ein Differenzialsignal durch Anwendung einer Differenzialfunktion auf das Differenzsignal generiert und dass die Steuereinheit (30-46, 70, 72) das Summensignal als Summierung des Taumelscheibensollwinkelsignals, des Proportionalsignals, des Integralsignals und des Differenzialsignals generiert.

4. Steuersystem nach Anspruch 1, **dadurch gekennzeichnet, dass** die Steuereinheit (30-46, 70, 72) das Steuersignal durch Anwendung einer Duofunktion (lead-lag function) auf das Summensignal generiert.

5. Steuersystem nach einem der vorhergehenden Ansprüche, **dadurch gekennzeichnet, dass** die Steuereinheit (30-46, 70, 72) ein Verhältnis-Sollwertsignal als Funktion des Drehzahlvorgabesignals und des Antriebsmotordrehzahlsignals und ein Motorsolldrehzahlsignal als Funktion des Verhältnis-Sollwertsignals und des Antriebsmotordrehzahlsignals generiert.

6. Steuersystem nach einem der vorhergehenden Ansprüche, **dadurch gekennzeichnet, dass** die Integralfunktion einen variablen Verstärkungsfaktor beinhaltet und die Steuereinheit (30-46, 70, 72) den variablen Verstärkungsfaktor als Funktion des Differenzsignals und Schwellwerten bestimmt.

7. Steuersystem nach Anspruch 5, **dadurch gekennzeichnet, dass** der variable Verstärkungsfaktor auf einen Minimalwert gesetzt wird, wenn das Differenzsignal kleiner oder gleich einem niedrigen Schwellwert ist und der variable Verstärkungsfaktor auf einen Maximalwert gesetzt wird, wenn das Differenzsignal größer als ein hoher Schwellwert ist.

8. Steuersystem nach Ansprüche 5, **dadurch gekennzeichnet, dass** der variable Verstärkungsfaktor auf einen variablen Wert gesetzt wird, wenn das Differenzsignal größer als ein niedriger Schwellwert und kleiner als ein hoher Schwellwert ist.
